(19) Europäisches Patentamt
European Patent Office
Office européen des brevets

(11) **EP 1 057 786 B1**

(12) # EUROPEAN PATENT SPECIFICATION

(45) Date de publication et mention de la délivrance du brevet:
**06.10.2004 Bulletin 2004/41**

(51) Int Cl.[7]: **C02F 1/72**, C02F 1/70

(21) Numéro de dépôt: **99401324.1**

(22) Date de dépôt: **02.06.1999**

(54) **Procédé d'activation et /ou d'auto-épuration d'effluents domestiques ou industriels**

Verfahren zur Aktivierung und/oder zur Selbstreinigung von Industrie- oder Haushaltsabwässern

Process of activation and/or auto purification of industrial or domestic effluents

(84) Etats contractants désignés:
**DE FR GB IT**

(43) Date de publication de la demande:
**06.12.2000 Bulletin 2000/49**

(73) Titulaire: **Ecolab Inc.**
**St. Paul, MN 55102-1390 (US)**

(72) Inventeur: **Hebert, Pascal**
**78360 Montesson (FR)**

(74) Mandataire:
**Sternagel, Fleischer, Godemeyer & Partner**
**Patentanwälte**
**An den Gärten 7**
**51491 Overath (DE)**

(56) Documents cités:
**EP-A- 0 276 044**
**EP-A- 0 387 816**
**WO-A-95/26318**
**DE-A- 19 507 678**
**FR-A- 2 466 280**
**FR-A- 2 689 786**
**FR-A- 2 771 729**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 057 786 B1

## Description

La présente invention concerne un procédé d'activation et/ou d'auto-épuration d'effluents domestiques ou industriels, en particulier de bains de lavage, de blanchiment ou de désinfection, renfermant des agents oxydants.

De nombreux processus tant ménagers qu'industriels mettent en jeu des bains renfermant des quantités parfois importantes d'agents oxydants (chlorites, hypochlorites, peroxydes minéraux ou organiques, ...) qui peuvent être récupérés (circulation en boucle fermée) ou simplement rejetés à l'égout.

A titre d'exemple non limitatif de tels processus, on peut citer le blanchiment du linge (blanchisserie, industrie textile) du papier (industrie papetière) ainsi que les processus de lavage et de désinfection à base d'agents oxydants (vaisselle, agro-alimentaire), tant sur le plan industriel que sur le plan de l'utilisateur particulier.

Dans leur contexte, ces processus mettent, en règle générale, en jeu des réactions de type ionique, ce qui a pour corollaire une réactivité relativement faible (aspect potentiel) et une vitesse peu élevée (aspect cinétique) ; il en résulte que des quantités d'agents oxydants non négligeables peuvent être présentes dans les flux sortant du réacteur.

Ces résidus entraînent différents inconvénients touchant, en particulier, le domaine de la protection de l'environnement : en effet, des effluents chargés en agents oxydants sont toxiques et polluants et ne peuvent pas être directement rejetés à l'égout, ce d'autant plus qu'ils sont peu biodégradables.

Il est en outre à noter qu'il peut être gênant de réutiliser, dans certaines phases d'un processus en boucle fermée, des solutions renfermant des agents oxydants, même à l'état de traces.

L'objet de l'invention est de proposer un procédé d'activation et/ou d'auto-épuration d'effluents domestiques ou industriels renfermant des agents oxydants de nature à remédier à ces inconvénients.

A cet effet, elle concerne un procédé du type susmentionné caractérisé en ce que l'on met en contact, le flux à traiter avec un catalyseur renfermant du magnésium métallique ou un alliage majoritaire en magnésium, de façon à générer au sein de ce flux des espèces radicalaires très réactives aptes à le neutraliser partiellement et à diminuer son caractère polluant.

Il est à noter que le magnésium présente l'avantage de ne pas être nuisible pour l'environnement et donc de ne pas entraîner de problèmes de rejets.

Selon une caractéristique préférentielle de l'invention le magnésium ou l'alliage majoritaire en magnésium est sous forme grossière.

On peut ainsi à titre d'exemple mettre en oeuvre des barreaux de magnésium.

Selon l'invention le magnésium ou l'alliage majoritaire en magnésium est sous forme métallique.

On a en effet pu établir que la mise en oeuvre conformément à l'invention d'oxydes ou d'hydroxydes métalliques qui se trouvent obligatoirement sous forme pulvérulente entraînerait des problèmes de colmatage.

Un tel procédé peut schématiquement être comparé à l'auto-épuration des gaz d'échappement des véhicules automobiles grâce à l'interposition d'un pot catalytique qui transforme les gaz toxiques en gaz carbonique et en eau : le principe d'un tel dispositif consiste, en effet, à faire passer le flux gazeux à traiter sur un lit catalytique de façon à réaliser l'oxydation du CO en CO2, la combustion des hydrocarbures imbrûlés et la réduction des oxydes d'azote.

Conformément à l'invention, le catalyseur agit cependant sur un flux non pas gazeux mais liquide, et doit donc être adapté en conséquence.

En règle générale, on opte pour une simple mise en contact ; bien entendu, la géométrie et le volume de l'appareillage utilisé ainsi que la quantité de catalyseur dépendent, dans chaque cas, de la cinétique de la réaction (température du flux, temps de contact souhaité, ...) ainsi que du débit et de la charge des effluents à traiter.

Il est à noter que, conformément à l'invention, le catalyseur peut être situé à l'extérieur du réacteur de lavage.

L'idée à la base de l'invention est donc d'activer les agents oxydants présents dans les effluents à traiter de façon à passer d'un processus de type ionique à un processus de type radicalaire dans lequel la réactivité est beaucoup plus élevée suite à l'apparition de radicaux libres dont la durée de vie est extrêmement courte.

Dans le cadre d'un processus en boucle fermée, les espèces radicalaires ainsi créées peuvent être remises en circulation de façon à élever le niveau de réactivité, ce en tenant toutefois compte des risques pouvant être inhérents à une réactivité plus forte associée à une cinétique plus rapide.

Conformément à l'invention, les espèces oxydantes radicalaires se combinent dans tous les cas quasi instantanément avec les matières organiques oxydables présentes dans les effluents ; il en résulte une oxydation au moins partielle de celles-ci en oxydes de carbone, ce qui présente l'avantage d'entraîner une diminution de la DCO (Demande Chimique en Oxygène) présente dans le flux ainsi que des charges financières associées.

Il est vraisemblable que la présence des espèces radicalaires entraîne parallèlement une diminution des populations bactériennes et autres micro-organismes et donc des éléments microbiologiques.

Plus précisément, les réactions radicalaires qui se produisent au sein des effluents à traiter conformément à l'invention peuvent être schématisées de la manière suivante :

$$R - 0 - 0 - \xrightarrow{\text{catalyseur}} R - 0 - + 0^*$$

$$n\ 0^* + (CH_2)_m \rightarrow n/2\ CO_2 + n\ H^+ + (CH_2)_{m-n/2}$$

En conséquence, ces réactions s'accompagnent d'un dégagement de $CO_2$ et d'une libération d'ions $H^+$ ; ceci entraîne une neutralisation des effluents vu que, conformément à l'invention, ceux-ci ont en règle générale un pH alcalin.

Par suite, les effluents ainsi traités peuvent être plus facilement réutilisés ou rejetés à l'égout.

Il est, également, à noter que lorsque l'on augmente la teneur du flux en agents oxydants, on augmente parallèlement les quantités présentes dans les rejets, et par voie de conséquence, on diminue la DCO et donc le caractère polluant des rejets, ce qui est particulièrement avantageux.

Comme il a déjà été indiqué le catalyseur se trouve préférentiellement sous forme grossière en particulier sous forme de barreaux c'est-à-dire sous une forme physique permettant l'obtention de surfaces de contact relativement importantes sans toutefois être trop finement divisé afin d'éviter au maximum le risque de colmatage par un fluide chargé.

Les caractéristiques du procédé d'activation et/ou d'auto-épuration qui fait l'objet de l'invention seront décrites plus en détail en se référant aux dessins annexés dans lesquels :

- la figure 1 est un schéma de principe d'une installation permettant la mise en oeuvre du procédé,
- la figure 2 représente le réacteur renfermant le catalyseur.

Selon la figure 1, le procédé est appliqué à une installation de blanchiment de linge.

Cette installation comporte une machine de lavage 1 pouvant être reliée à un circuit 2 de circulation de liquide de lavage en boucle fermée selon les flèches a.

Ce circuit de circulation 2 est équipé d'une pompe de circulation 3 ainsi que d'un contrôleur de débit 4 associé à une vanne de réglage du débit 5 et d'un réacteur 10 renfermant le catalyseur.

La machine de lavage 1 est équipée d'organes de commande 7 de la pompe de circulation 3 représentés schématiquement.

Selon la figure 2, le réacteur 6 est un réacteur essentiellement cylindrique fermé à sa partie supérieure par un bouchon 8 dans lequel sont montées d'une part une tubulure d'entrée 9 et d'autre part une tubulure de sortie 10 du liquide en circulation dans le circuit 2.

La circulation du liquide de lavage dans le réacteur 6 est représentée par les flèches x.

La tubulure d'entrée 9 est coudée à angle droit et comporte une branche amont 11 essentiellement horizontale ainsi qu'une branche aval 12 essentiellement verticale ; la branche aval 12 dans laquelle le liquide de lavage circule de bas en haut se prolonge au-delà du bouchon 8 jusqu'au voisinage du fond 15 du réacteur 6, coaxialement à celui-ci de façon à définir une chambre périphérique 13 dans laquelle le liquide de lavage circule de bas en haut avant de pénétrer dans la tubulure de sortie 10 qui a elle aussi une forme coudée. Un catalyseur 14 non représenté en particulier des barreaux de magnésium métallique ou d'un d'alliage majoritaire en magnésium est mis en place dans la chambre périphérique 13 du réacteur 6.

Selon les figures, en agissant sur les organes de commande 7 et sur la vanne de réglage du débit 5, l'utilisateur peut adapter la vitesse de passage ainsi que le temps de passage du liquide de lavage dans le réacteur 6 pour une capacité de pompe de circulation donnée et une quantité de catalyseur métallique donnée et moduler ainsi l'effet catalytique.

Il est clair qu'en fonction de la taille de la machine et de l'effet souhaité on peut être amené à modifier la quantité de catalyseur, sa forme physique, le débit nominal de circulation et le temps de fonctionnement de la pompe.

Les exemples susmentionnés permettent de mieux mettre en lumière les avantages du procédé conforme à l'invention.

Exemple 1

Dans une installation telle que représentée sur les figures 1 et 2, on a chargé la machine de lavage, d'une capacité de 10 kg, avec 5 kg de linge.

On a placé six barreaux de magnésium métallique dans la chambre périphérique du réacteur : chaque barreau

mesurait 15 cm pour un diamètre de 2 cm, ce qui correspond à une surface de 95 $cm^2$ et à un poids de l'ordre de 83 g par barreau, soit une surface de contact de 570 $cm^2$ environ.

On a réglé le débit de la pompe à environ 10 litres par minutes.

Celle-ci était connectée côté aspiration à un robinet de prise d'échantillon situé à la partie inférieure de la machine de lavage et côté refoulement au bac à produits, à la partie supérieure de cette machine.

Dans le cadre de cet exemple on a utilisé le programme de lavage à 60°C en introduisant dans la machine 80 g de détergent ELECTRA® en début de cycle et 30 ml d'agent de blanchiment OZONIT® 6 min après le début de la phase de lavage.

On a mesuré que la quantité d'eau nécessaire pour chaque cycle était de 50 litres.

On a ainsi effectué deux essais à savoir un premier essai en mettant en oeuvre le programme standard et un second essai en branchant la pompe de circulation pendant les dix dernières minutes de l'étape de lavage, c'est-à-dire lors de l'introduction de l'agent de blanchiment et pendant les cinq minutes de la phase de premier rinçage.

Pour chaque essai, on a placé dans la machine de lavage une bande multisalissures (blanc non azuré, sang, cacao, coton écru, vin rouge - toutes les bandes étant issues d'un même lot), et, après lavage, on a évalué celle-ci par mesure des coordonnées chromatiques (X, Y, Z) avec un illuminant D65, conservation des ultraviolets et un observateur à 10° comme cela est courant utilisé dans les prescriptions de la commission internationale de l'éclairage CIE.

On a retenu la valeur de Z comme élément de comparaison : plus cette valeur est élevée, meilleur est le résultat.

Pour chaque série d'essais on a procédé à 7 mesures et on a éliminé à chaque fois la valeur minimale et la valeur maximale, et le résultat présenté correspond à la moyenne des cinq valeurs restantes.

Tous les paramètres étant identiques à l'exception de la mise en route ou non de la pompe de circulation, on a observé les résultats des valeurs de Z obtenues par la mesure des bandes multisalissures ; les résultats obtenus sont rassemblés dans le tableau ci-dessous :

| Salissure | témoin non traité | cycle standard | cycle avec circulation |
|---|---|---|---|
| Blanc non azuré | 83,7 | 94,5 | 99,1 |
| Sang | 12,1 | 38,8 | 48,0 |
| Cacao | 25,3 | 48,9 | 52,1 |

Sur les autres salissures (coton écru et vin rouge) les écarts observés sur la valeur en Z étant inférieurs ou égaux à 1 n'ont pas été jugés significatifs.

Cet exemple a donc permis de prouver que dans le cadre des conditions choisies il est possible d'obtenir des résultats de blanchiment supérieurs sur les salissures retenues, par circulation du bain de lavage au travers du catalyseur dans les conditions susmentionnées.

Exemple 2

On a repris l'exemple 1, en conservant les mêmes conditions expérimentales mais en faisant varier les quantités de détergent et d'agent de blanchiment. On a en effet mis en oeuvre 150 g de détergent ELECTRA® et 100 ml d'agent de blanchiment OZONIT®.

On a ainsi pu obtenir les résultats rassemblés dans le tableau ci-dessous :

| Salissure | Témoin non traité | Cycle standard | Cycle avec circulation |
|---|---|---|---|
| Blanc non azuré | 83,7 | 101,1 | 103,4 |
| Sang | 12,1 | 49,5 | 67,8 |
| Cacao | 25,3 | 54,3 | 62,0 |
| Coton écru | 58,7 | 70,0 | 71,5 |
| Vin rouge | 38,9 | 68,5 | 71,1 |

Cet exemple a permis de prouver que dans le cadre des conditions de l'essai, il est possible d'améliorer les résultats par circulation du bain de lavage au travers du catalyseur.

Il est également à noter que lorsque l'on augmente les quantités de détergent, des salissures qui n'étaient pas ou peu sensibles à la circulation extérieure le deviennent.

Exemple 3

On additionné à un effluent industriel issu d'une blanchisserie (prélèvement dans le bassin d'homogénisation) une quantité d'agent de blanchiment de 0,7 ml/litre (OZONIT®) pour simuler la quantité résiduelle d'agent de blanchiment.

Cet effluent renfermait environ 70 mg/litre d'oxygène actif résiduel (dosage au permanganate 0,8 N en milieu acide) et sa demande chimique en oxygène (DCO) était de l'ordre de 980 à 1 000 mg $O_2$/litre (méthode de détermination par lecture spectro colorimétrique sur du dichromate de potassium).

On a introduit dans un demi litre de cette préparation un barreau de magnésium de 15 cm de long, 2 cm de diamètre et pesant environ 83 g.

L'évolution dans le temps de la teneur en oxygène actif à température ambiante à été la suivante :

| | Initial | 2 minutes | 4 minutes | 7 minutes | 10 minutes |
|---|---|---|---|---|---|
| Ox. actif | 70 | 50 | 40 | 20 | < 10 |
| DCO | 980-1000 | | | | 825-830 |

On a ainsi pu observer que la consommation accélérée d'oxygène provoque une décroissance de la demande chimique en oxygène qui est un critère couramment repris dans l'évaluation de la charge polluante d'un effluent.

On peut donc envisager de placer un tel système de circulation sur des effluents présentant une certaine teneur en oxygène actif résiduel afin de favoriser la consommation de cet oxygène actif « dormant » pour réduire la demande chimique en oxygène de l'effluent et donc réduire la charge polluante.

## Revendications

1. Procédé d'activation et/ou d'auto-épuration de bains de lavage, de blanchiment ou de désinfection, domestiques ou industriels, renfermant des agents oxydants **caractérisé en ce que**
   l'on met en contact le flux à traiter avec un catalyseur de magnésium métallique ou un alliage majoritaire en magnésium de façon à générer au sein du flux des espèces radicalaires très réactives aptes à le neutraliser partiellement et à diminuer son caractère polluant.

2. Procédé selon la revendication 1
   **caractérisé en ce que**
   le magnésium ou l'alliage majoritaire en magnésium est sous forme grossière.

## Patentansprüche

1. Verfahren zur Aktivierung und/oder Selbstreinigung von Oxidationsmittel enthaltenden Wasch-, Bleich- oder Desinfektionsbädern aus Haushalt oder Industrie, **dadurch gekennzeichnet, dass** der zu behandelnde Fluss mit einem Katalysator aus metallischem Magnesium oder einer überwiegend aus Magnesium bestehenden Legierung derart in Kontakt gebracht wird, dass innerhalb des Flusses sehr reaktive Radikale erzeugt werden, welche in der Lage sind, ihn teilweise zu neutralisieren und seine umweltverschmutzende Eigenschaft zu vermindern.

2. Verfahren nach Anspruch 1, **dadurch gekennzeichnet, dass** das Magnesium oder die überwiegend aus Magnesium bestehende Legierung in grober Form vorliegt.

## Claims

1. Method for activation and / or self purification of domestic or industrial washing, bleaching or disinfectant baths containing oxidising agents, **characterised in that** the flow to be treated is brought into contact with a metallic magnesium catalyst or an alloy composed mostly of magnesium, so as to generate within the flow highly reactive radicalar species, capable of partially neutralizing it and reducing its polluting nature.

2. Method according to claim 1, **characterised in that** the magnesium or the alloy containing mostly magnesium is in a coarse form.

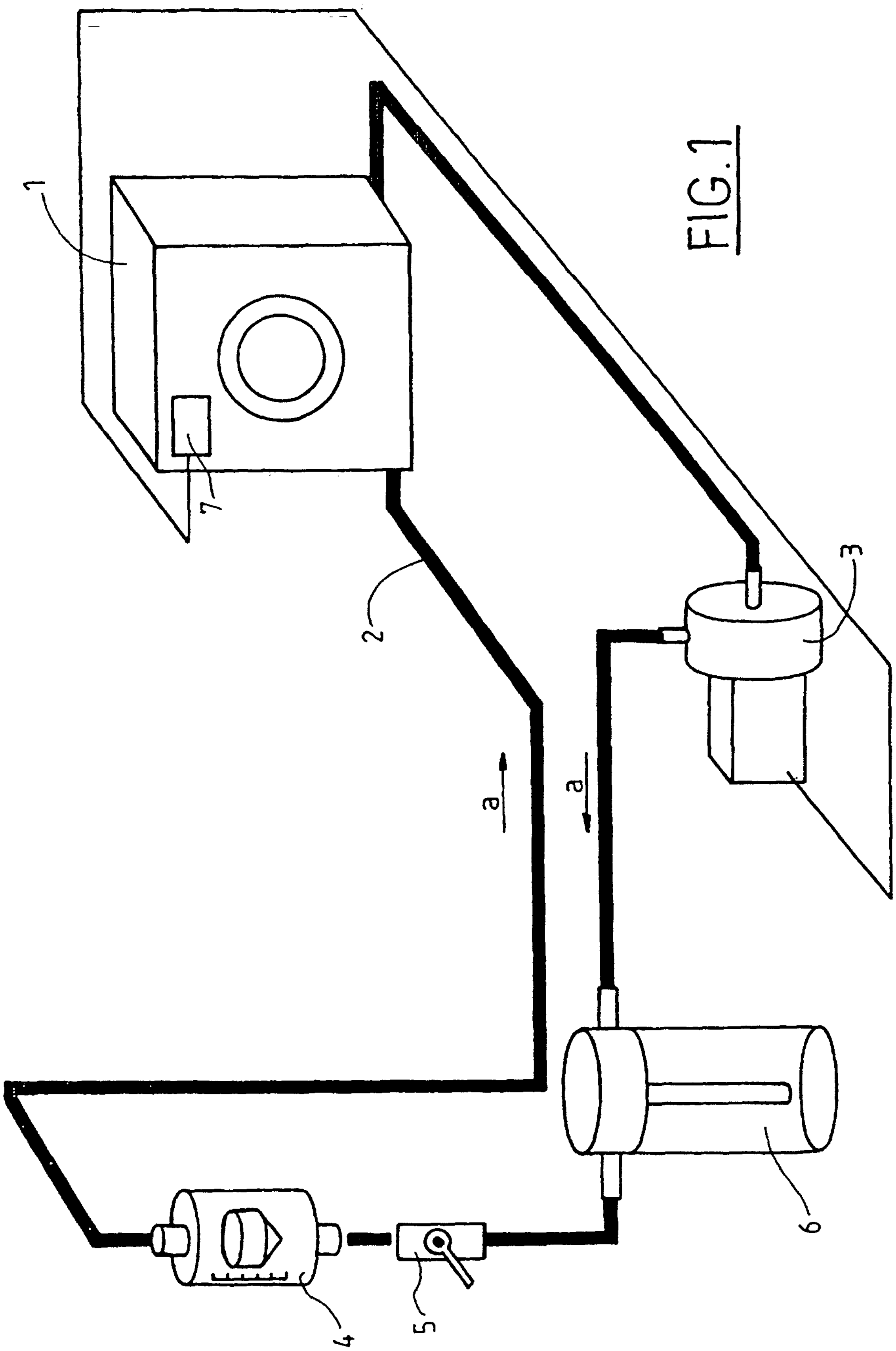


FIG.1

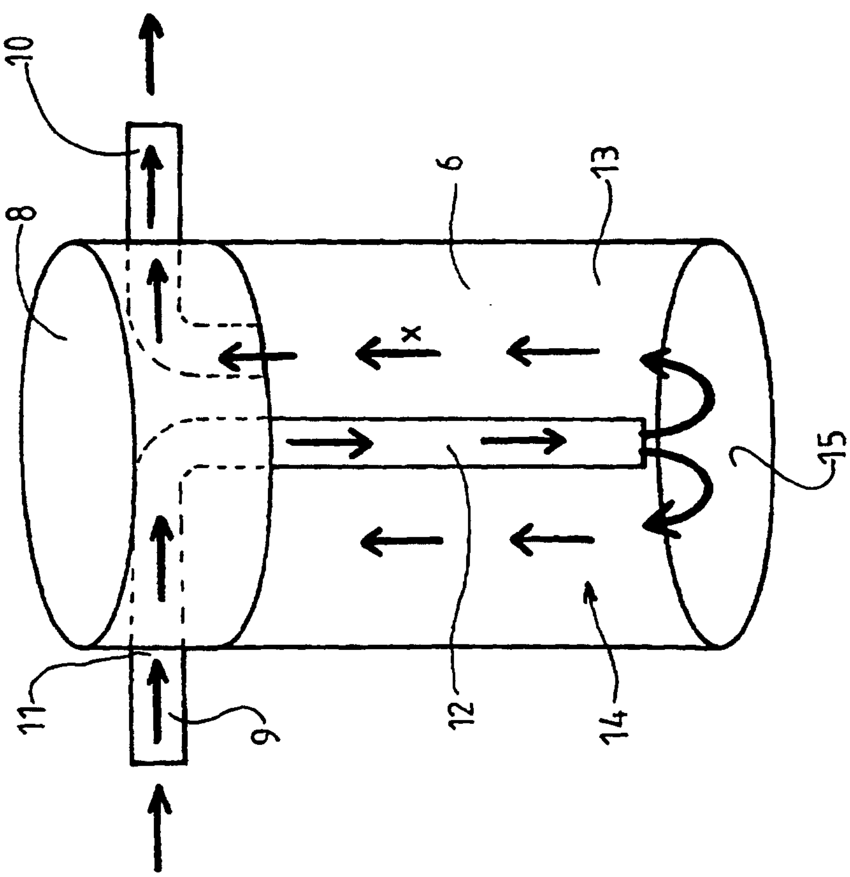


FIG. 2